# DEMANDE DE BREVET EUROPEEN

(11) **EP 1 101 635 A1**
(43) Date de publication de la demande: **23.05.2001**
(21) Numéro de dépôt: 99490036.3
(22) Date de dépôt: 17.11.1999
(51) Int. Cl.: B60D 1/60, B60R 25/00, B60T 7/20

(54) **Dispositif antivol à double action pour véhicules aptes à être attelés et remorques pourvues d'un tel dispositif**

(71) Demandeur: Remorques Hubiere S.A, 59610 Fourmies (FR)
(72) Inventeur: Hubiere, Alain, 59610 Fourmies (FR)
(74) Mandataire: Matkowska, Franck

(57) **Abrégé**

L'invention se rapporte à un dispositif antivol pour remorques comprenant au moins un moyen de blocage de la course de desserrage du levier de frein (3) formant butée mécanique sur la course de celui ci, et au moins un moyen d'obturation (15) de l'organe d'attelage tel qu'une rotule ou un anneau d'attelage (16), le moyen de blocage de la course de desserrage de levier de frein (3) étant relié au moyen d'obturation (15) de l'organe d'attelage (16) par un moyen de liaison tel q'une chaîne (13), dont la longueur et la résistance mécanique empêche le mouvement du moyen d'obturation (15) sans déplacement du moyen de blocage (1).

Application d'un tel dispositif antivol à toute remorque à timon droit ou réglable.

## Description

L'invention se rapporte au domaine technique des antivols pour remorques, vans, caravanes ou tout autre véhicule attelé équivalent.

On connaît déjà, dans l'art antérieur, différents systèmes antivols pour de tels véhicules.

Certains systèmes immobilisent le véhicule par des mécanismes à sabot. On peut se reporter par exemple, pour ce premier type d'antivols, aux documents WO-A-94/21496, WO-A-91/15385.

De tels systèmes sont complexes à mettre en place et ne sont envisageables en pratique que pour des véhicules tels que des caravanes ou des vans qui restent parqués très longtemps en un même lieu.

D'autres systèmes agissent à l'aide de mâchoires ou de boîtiers venant recouvrir les parties d'attelage.

On peut se reporter, par exemple, pour ce deuxième type d'antivols, aux documents EP-A-318 653, EP-A-105 621, WO-A-96/28312, WO-A-96/05989, WO-A-98/09832, WO-A-95/15864, WO-A-94/29131, WO-A-93/16892, WO-A-81/00832, FR-A-2 668 738, FR-A-2 621 285, FR-A-2 611 622, FR-A-2 609 944, FR-A-2 418 122, FR-A-2 458 410.

Ce deuxième type d'antivols présente l'inconvénient de n'assurer qu'une protection limitée, l'ouverture du boîtier ou des mâchoires permettant l'accès direct au véhicule.

Par ailleurs, les systèmes de mâts de parquage ne sont envisageables en pratique que pour des véhicules stockés en des lieux prédéfinis, ce qui n'est pas le cas des remorques employées couramment sur les chantiers du bâtiment par exemple.

Un troisième type d'antivol pour véhicule attelé agit directement sur le circuit hydraulique ou pneumatique du système de frein des remorques.

On peut se reporter, par exemple, pour ce troisième type d'antivol, aux documents suivants : WO-A-94/29155, WO-A-84/03263, WO-A-87/02115, EP-A-064 124. Ce troisième type d'antivol présente l'inconvénient de modifier sensiblement la structure du circuit hydraulique des véhicules, opération complexe dont le déroulement dépend du type de véhicule.

Un tel système d'antivol ne peut pas en pratique être monté en kit sur tout type de véhicule attelé.

D'autres systèmes d'antivols pour remorques mettent en oeuvre des moyens électroniques, des alarmes sonores, ou d'autres moyens spécifiques à une conception de remorque, ces moyens s'avérant complexes et onéreux. On peut se reporter, par exemple, aux documents FR-A-2 551 708, FR-A-2 562 850, FR-A-2 703 639, FR-A-2 721 881, WO-A-87/02947, WO-A-98/01324. Tous les systèmes mentionnés ci-dessus présentent, en plus de leurs inconvénients spécifiques, un inconvénient qui leur est commun : ils n'offrent qu'une seule sécurité antivol, de type tout ou rien : un seul mécanisme empêche le vol, ce mécanisme une fois contourné ou fracturé, le vol est possible, sans qu'une trace de ce vol ne soit toujours visible.

Le document FR-A-2 621 875 décrit un dispositif antivol agissant en deux points. Une serrure à clef permet l'immobilisation d'une demi-coquille articulée en position antivol, position dans laquelle une boule d'attelage ne peut être mise en place. Un piston coulissant dans une cavité du timon chasse le liquide de frein dans une canalisation branchée sur le circuit de freinage. De sorte que l'ensemble peut se trouver dans deux états :
- un état dans lequel la boule d'attelage ne peut être mise en place, la poignée articulée autour de la coquille fixe demi-sphérique concave de l'attelage étant en position basse verrouillée, le piston comprimé par un ressort ayant de plus chassé le liquide de frein ;
- un état dans lequel la poignée est en position haute et vient comprimer le ressort par action sur le piston, l'insertion de la boule d'attelage étant rendue possible et le déblocage des freins étant obtenu.

Le système antivol décrit dans le document FR-A-2 621 875, s'il est à double action, n'est qu'à une seule sécurité. Une action sur la serrure à clef conduit à la libération de la poignée, ce qui permet l'introduction de la boule d'attelage et le déblocage des freins.

De plus, le système antivol décrit dans ce document FR-A-2 621 875 présente deux inconvénients majeurs : il est limité, par sa structure même, aux attelages à boules, et il modifie de manière très importante la structure de ce type d'attelage. De sorte qu'un tel dispositif ne peut être monté en kit sur toute remorque existante, en particulier de façon temporaire.

Au total, les systèmes antivols connus de l'art antérieur pour les remorques ou véhicules équivalents s'avèrent peu satisfaisants.

De ce fait, lorsque des véhicules pouvant être attelés sont employés sur des chantiers, leur propriétaire ou locataire a souvent recours à un expédient consistant à les suspendre à l'aide de grues, notamment dans le cas de compresseurs.

L'invention vise à fournir un dispositif antivol pour véhicule attelé ou engin de servitude, tel que remorque, van, caravane, compresseurs, ou tout autre véhicule équivalent, ce dispositif ne présentant pas les inconvénients de ceux connus dans l'art antérieur.

Le dispositif antivol selon l'invention permet notamment :
- une double sécurité antivol ;
- une adaptation rapide sur différents types de remorque, van ou caravane, à attelage rotule ou anneau ;
- une mise en place rapide en position antivol, sans qu'une structure au sol tel que mât de parquage soit nécessaire.

A cette fin l'invention se rapporte, selon un premier aspect, à un dispositif antivol pour remorques, caractérisé en ce qu'il comporte un moyen de blocage de la course de desserrage du levier de frein formant butée mécanique sur la course de celui ci.

Le dispositif antivol présente en outre les caractères suivants, pris seuls ou en combinaison :
- le moyen de blocage comprend au moins une barre rigide apte à être montée en coulissement sur le châssis de la remorque et à être maintenue dans au moins une position dans laquelle une première partie extrême de cette barre saille au delà du plan moyen de manoeuvre du levier de frein ;
- ladite première partie extrême de la barre rigide est pourvue d'au moins une portion courbée placée sensiblement en regard du levier de frein en position serré ;
- le dispositif antivol comprend un moyen de liaison entre le moyen de blocage de la course de desserrage du levier frein et un moyen d'obturation de l'organe d'attelage.

Selon une première réalisation, le moyen d'obturation de l'organe d'attelage comprend au moins une plaque rigide de diamètre supérieur à celui de l'anneau d'attelage ;

Selon une deuxième réalisation, le moyen d'obturation comprend deux plaques rigides de diamètres supérieurs à celui de l'anneau d'attelage, ces deux plaques étant aptes à être placées au dessus et en dessous de l'ouverture de l'anneau, en position verrouillée entre elles.

Selon une troisième réalisation, le moyen d'obturation est un manchon encapuchonnant la rotule d'attelage.

Selon une quatrième réalisation, le moyen d'obturation est un boîtier comprenant une paroi de fond et une paroi latérale, ce boîtier étant pourvu d'une ouverture opposée au fond.

Selon un mode de réalisation particulier, le moyen de liaison est une chaîne ou tout autre moyen équivalent dont la longueur et la résistance mécanique sont telles que le dégagement du moyen d'obturation est impossible sans déblocage de la barre.

Le dispositif antivol comprend un moyen de verrouillage de la barre en au moins une position de blocage de la course du levier de frein, ce moyen de verrouillage étant, dans une réalisation, placé entre deux flasques de guidage en coulissement de la barre rigide, ces deux flasques étant solidaires du châssis de la remorque.

Dans un mode de mise en oeuvre du dispositif, les flasques sont disposés en saillie vers le haut sur le châssis de la remorque.

L'invention se rapporte, selon un deuxième aspect, à une remorque comprenant au moins un dispositif antivol double action tel que présenté ci-dessus. Dans une réalisation, la remorque comprend un timon droit.

Dans une autre réalisation, la remorque comprend un timon réglable.

D'autres objets et avantages de l'invention apparaîtront au cours de la description suivante de modes de réalisation, description qui va être effectuée en se référant aux dessins annexés, dans lesquels :
- Les figures 1a et 1b sont des vues latérales de dispositifs antivol double action selon l'invention, montés sur un attelage à anneau (figure 1a) ou à rotule (figure 1b), sur timon réglable ;
- la figure 2 est une vue en coupe transversale selon le plan ll-ll de la figure 1a ;
- les figures 3a et 3b sont des vues de dessus des dispositifs antivol double action représentés sur les figures 1a et 1b respectivement ;
- les figures 4a et 4b sont des vues latérales de dispositifs antivol double action selon l'invention, montés sur un attelage à anneau (figure 4a) ou à rotule (figure 4b), sur timon droit ;
- la figure 5 est une vue en coupe transversale selon le plan V-V de la figure 4b;
- les figures 6a et 6b sont des vues de dessus des dispositifs antivol double action représentés sur les figures 4a et 4b respectivement.

Dans la suite du texte, afin de simplification, le terme remorque sera employé pour désigner tout véhicule pouvant être attelé tel que remorques fixes ou basculantes, plateaux fixes ou basculants, plateaux coulissants, bennes, citernes, porte-engins, porte-voitures, châssis nus à carrosser, caravanes, compresseurs, vans à bestiaux et notamment à chevaux, ou tout autre véhicule équivalent, que cette remorque soit élaborée au moins en partie en bois, en alliage métallique ou en matériau synthétique éventuellement renforcé de fibre.

Par exemple, un système antivol selon l'invention pourra être monté sur une remorque à châssis mécano-soudé galvanisé et plancher bois, de PTAC compris entre 500 et 3500 Kg, de longueur utile comprise entre 1,5 et une dizaine de mètres, à un, deux ou trois essieux, pourvu, selon les normes européennes en vigueur, d'un frein à inertie avec recul automatique, ou électrique ou hydraulique. De telles remorques sont couramment utilisées dans le domaine du bâtiment et des travaux publics, par les paysagistes et les loueurs de matériels.

Dans les figures, les dispositifs antivols sont vus en position active, le levier de frein de la remorque étant en position serrée.

Il est entendu toutefois que le dispositif antivol pourrait être employé lorsque le levier de frein est en position desserré, une seule action antivol étant alors obtenue, ainsi qu'il apparaîtra par la suite.

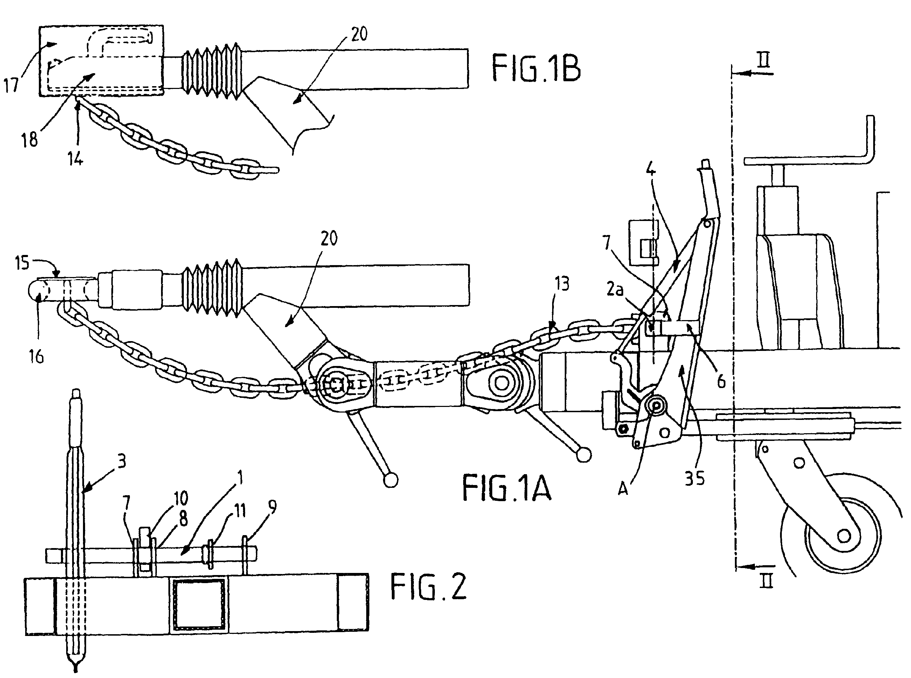

Les termes « inférieur », « supérieur » seront employés par la suite en référence à une verticale, la remorque étant supposée placée à l'horizontale. On se rapporte tout d'abord aux figures 1 à 3.

Le système antivol comprend une barre 1 dont une première partie extrême 2a est placée sur la course du levier de frein 3.

Dans la réalisation représentée, cette course est une rotation de la barre de commande du levier de frein autour d'un axe A sensiblement parallèle à la barre 1, cette course s'effectuant dans un plan P perpendiculaire à l'axe A. Il est entendu toutefois que la barre 1 pourrait être inclinée par rapport à cet axe de rotation A.

La barre 1 est réalisée en un matériau rigide, résistant à la coupe mécanique ou au chalumeau, tels que certains alliages métalliques.

La barre 1 du système antivol est maintenue en position de blocage de la course du levier de frein par un mécanisme qui sera décrit par la suite.

Dans la réalisation représentée, le levier de frein 3 comporte un vérin d'assistance 4, par exemple à gaz, et la partie extrême 2a de la barre 1 est placée en saillie, au delà du plan P, entre la barre de commande 5 du levier 3 et ce vérin d'assistance 4.

Dans d'autres réalisations, le levier de frein est dépourvu d'un tel vérin d'assistance.

Pour éviter qu'un pliage à force du levier de frein 3 ne permette de contourner la partie 2a de la barre 1, il est prévu, dans la réalisation représentée, que la partie extrême 2a de cette barre 1 est recourbée, par exemple en forme de L.

Cette forme de L peut être obtenue par pliage de la barre 1 ou par assemblage d'un segment de barre 6, perpendiculairement à la partie extrême 2a.

Cet assemblage peut être réalisé par soudage, boulonnage, rivetage ou tout autre moyen d'assemblage équivalent.

La base du L s'étend dans un plan P' sensiblement parallèle au plan P.

Le levier de frein étant placé en position de serrage, son pliage à force pour passer au delà de la partie extrême recourbée 2a de la barre 1 impliquerait à la fois un serrage supplémentaire des freins par rotation du levier autour de l'axe A, éventuellement au delà de la position extrême de serrage manuel, et un pliage important de la barre de commande 5.

Cette action nécessite une force très élevée.

Cette action est de plus contrecarrée, lorsqu'un vérin 4 est prévu, par la résistance propre audit vérin et par la butée de celui ci contre la partie extrême 2a de la barre 1, lors de la rotation du levier de frein.

On obtient ainsi une première sécurité antivol.

Dans le mode de réalisation représenté, la barre 1 est de section transversale sensiblement carrée et sa première partie extrême 2a est courbée en L.

Dans d'autres modes de réalisation, non représentés, la barre 1 est de section transversale circulaire, polygonale ou ovale et/ou sa première partie extrême est en forme de carré, rectangle ou disque s'étendant dans un plan P' tel que défini ci-dessus.

La barre 1 est supportée et guidée en translation lors de son montage et démontage par des flasques 7, 8, 9 assemblés au châssis de la remorque, par exemple par soudage ou tout autre moyen équivalent.

Ces flasques 7, 8, 9 sont, dans la réalisation représentée, des plaques planes percées de trous de guidage de la barre 1, sans autre jeu que fonctionnel.

Entre deux des flasques 7, 8 est prévu un moyen de blocage 10 du mouvement de translation de la barre 1.

Ce moyen de blocage 10 est par exemple un cadenas, une goupille cadenassée ou une mâchoire, une bride cadenassée.

Le mouvement de translation de la barre 1 est empêché par butée de ce moyen de blocage 10 contre les flasques 7, 8.

Entre deux des flasques 7, 8, 9 est logée une plaque 11, apte à être montée sur la barre 1, cette plaque 11 étant solidaire d'une première partie extrême 12 d'un moyen de liaison 13 tel que par exemple une chaîne en acier.

L'autre partie extrême 14 du moyen de liaison 13 est solidaire d'un moyen d'obturation 15 d'un anneau d'attelage 16 et/ou d'un boîtier 17 pouvant encapuchonner une rotule d'attelage 18.

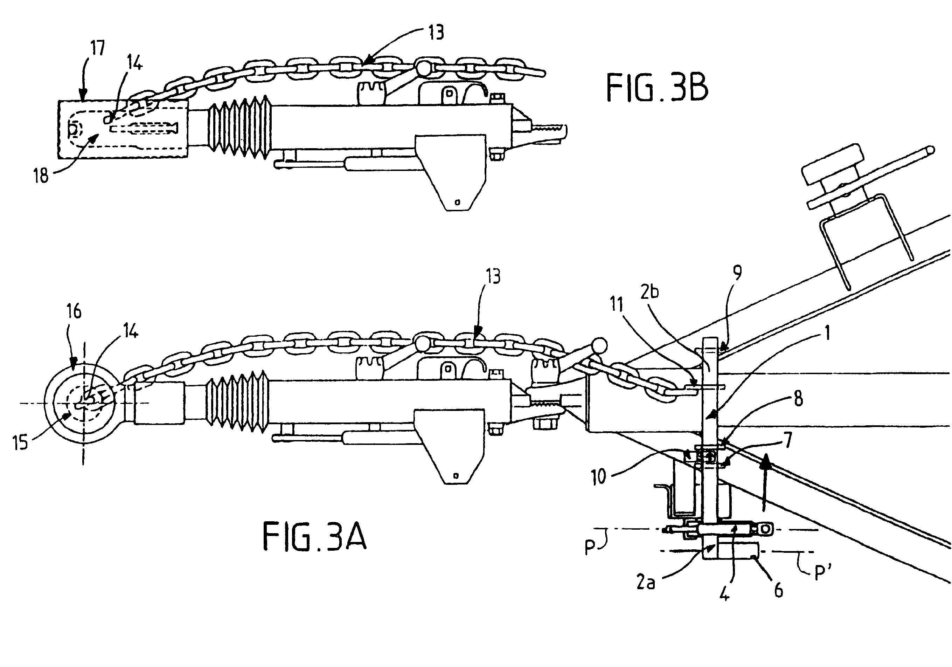

Dans le mode de réalisation représenté en figures 1a et 3a, le moyen d'obturation 15 de l'anneau d'attelage 16 est un disque rigide placé en partie supérieure de l'anneau d'attelage et de diamètre supérieur à celui-ci.

Par exemple, le disque aura un diamètre de l'ordre de 60 mm pour un anneau d'attelage de diamètre 50 mm, et sera réalisé en acier ou alliage métallique à haute résistance.

La longueur du moyen de liaison 13 et sa rigidité sont telles qu'il n'est pas possible de déplacer le moyen d'obturation 15 d'une valeur suffisante pour atteler la remorque, cette opération nécessitant une force importante.

Et ceci quelle que soit la distance séparant la barre 1 de l'anneau d'attelage 16, cette distance pouvant être modifiée par réglage du timon.

Dans une réalisation avantageuse, les dimensions du moyen de liaison sont telles que même si le moyen d'obturation 15 est déplacé de l'anneau 16, il n'est pas possible d'utiliser cet anneau 16 pour atteler la remorque. Par exemple, les maillons d'une chaîne de liaison traversant l'anneau 16 ne sont que de dimensions légèrement inférieures à l'ouverture de cet anneau 16.

Selon une première variante, le moyen d'obturation de l'anneau d'attelage comprend une plaque inférieure et une plaque supérieure, placées de part et d'autre de l'anneau d'attelage, ces deux plaques étant éventuellement reliées par un câble d'acier formant une boucle extérieure à l'anneau d'attelage.

Selon un premier mode de verrouillage de cette première variante, une goupille, solidaire d'une des plaques traverse l'autre plaque lorsque le moyen d'obturation est en position antivol. Un cadenas ou tout autre moyen équivalent est prévu pour bloquer le mouvement des plaques par rapport à la goupille.

Selon un deuxième mode de verrouillage de cette première variante, un verrou ne présentant aucun point d'appui, par exemple logé dans le corps desdites plaques est mis en oeuvre.

Selon une deuxième variante, le boîtier d'obturation 17 peut être employé pour encapuchonner l'anneau d'attelage.

Le moyen 17 pour encapuchonner la rotule 18 est, dans la réalisation des figures 1 b et 3b, un boîtier parallélépipédique rigide à une seule ouverture, disposée vers l'arrière de l'attelage.

Dans une première variante de réalisation, ce moyen est une bride de serrage venant enserrer la poignée de manoeuvre et le timon.

Dans une deuxième variante, ce moyen est une cage de section transversale rectangulaire et ouverte à ses deux extrémités, cette cage étant d'une longueur telle que son coulissement est bloqué par l'arbre incliné 20 du timon et ne permet pas l'accès à la rotule.

Le montage du système antivol de figures 1 à 3 peut être effectué de la manière suivante.

Le levier de frein à mains étant en position de serrage, le moyen d'obturation de l'anneau 16 ou de la rotule 18 étant en place, la plaque 11 est montée en coulissement sur la barre 1 lorsque cette barre 1 est introduite dans les trous de guidage des flasques 7, 8, 9 dans le sens de la flèche F.

Puis le moyen de blocage 10 est mis en place sur la barre 1.

Le démontage peut être effectué de la manière suivante.

Le moyen de blocage 10 est enlevé et la barre 1 est coulissée dans le sens inverse à la flèche F. La plaque 11 d'extrémité de chaîne 13 est alors enlevée ce qui permet d'ôter le moyen d'obturation 15, 17. Puis la barre 1 est enlevée ce qui permet la manoeuvre du levier de frein.

Il est bien entendu possible d'utiliser le dispositif antivol en ne mettant en oeuvre que le blocage de la course du levier de frein à mains, l'accès à l'anneau d'attelage ou à la rotule étant empêché par des moyens conventionnels.

Dans ce cas, la chaîne n'est par exemple pas reliée à la barre rigide 1.

Il est également possible d'utiliser le dispositif antivol en ne mettant en oeuvre que le moyen de liaison 13 relié à la barre 1, cette barre ne bloquant pas la course.

Dans ce cas, la barre 1 est par exemple montée en inversant les positions de ses deux parties extrêmes 2a, 2b.

Toutefois, la combinaison des deux moyens antivol confère une sécurité accrue, par son impact dissuasif.

Cet effet dissuasif pourra être renforcé par la mise en place :
- de plusieurs moyens de blocage 10 sur la barre 1 ;
   et/ou
- de plusieurs moyens de liaison tels que des chaînes entre le moyen d'obturation 15, 17 et la barre 1 ;
   et/ou
- de plusieurs barres 1, parallèles entre elles, par exemple placées l'une au dessus de l'autre.

Le montage d'un dispositif antivol tel que décrit ci dessus sur un timon droit ne pose pas de difficultés particulières.

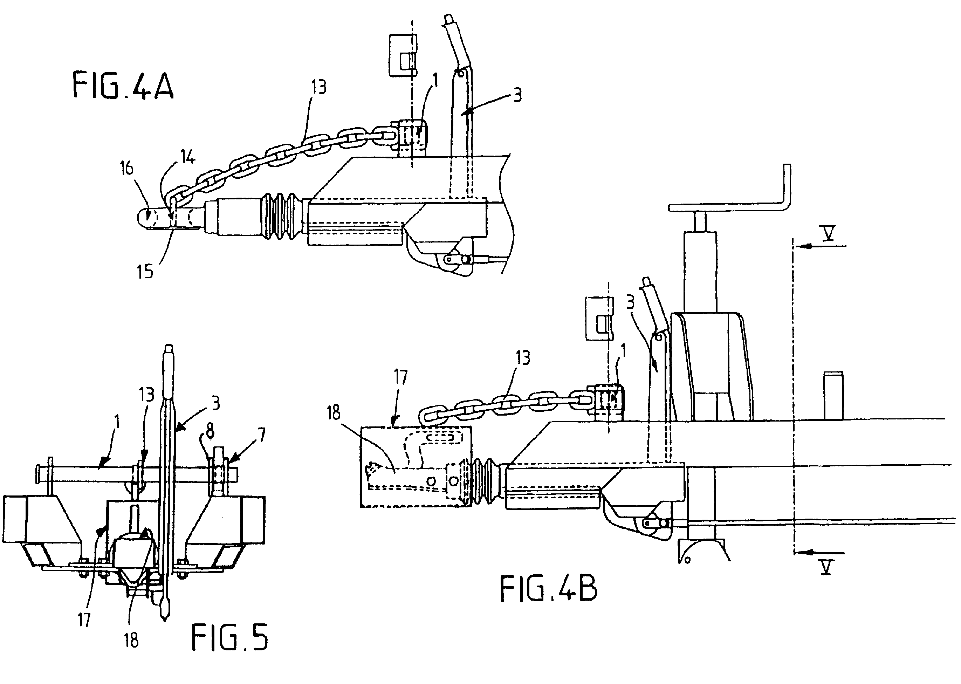

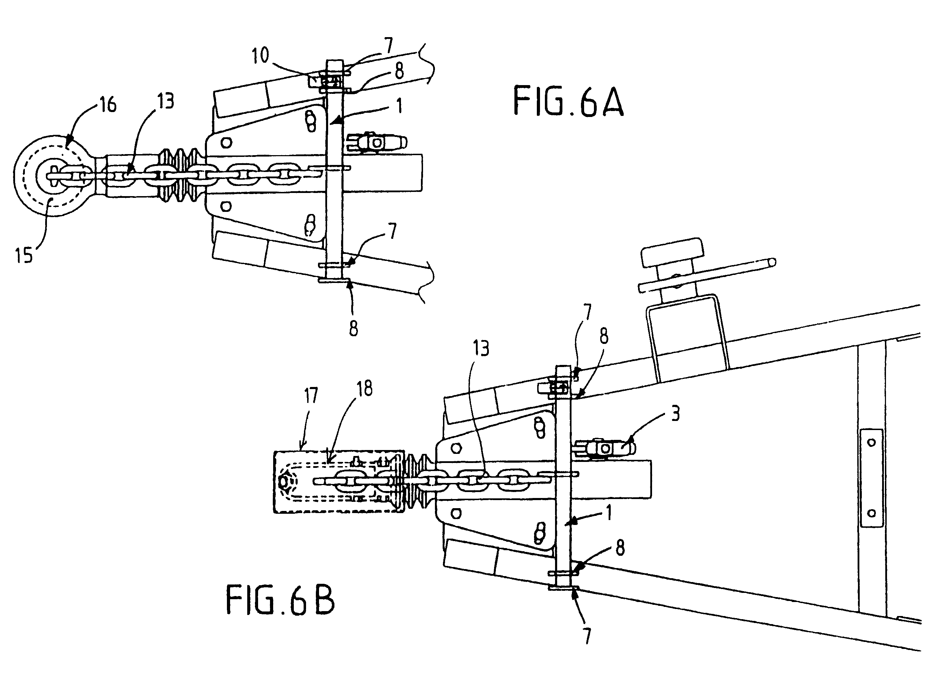

Les figures 4 à 6 montrent un tel montage.

Compte tenu de la position de l'anneau d'attelage 16, lorsque le moyen d'obturation 15 de cet anneau ne comporte qu'une seule plaque, celle ci doit être placée en face inférieure de l'anneau.

Dans le mode de réalisation représenté en figures 3 à 6, deux paires de flasques 7, 8 aptes à enserrer le moyen de blocage 10 sont solidaires de chacun des deux longerons de l'attelage, autorisant un montage de ce moyen de blocage 10 à droite ou à gauche de la remorque.

Les mêmes variantes que celles décrites ci dessus en référence aux figures 1 à 3 peuvent être envisagées pour les moyens d'obturation 15, 17 de l'anneau d'attelage ou de la rotule.

Lorsque le système antivol est en position inactive, la barre 1 peut être placée et bloquée dans une position de repos, dans laquelle elle n'entrave pas le mouvement du levier de frein.

Par exemple, la barre 1 peut être pourvue d'une rangée de trous permettant son blocage dans différentes positions, dont au moins une position de blocage de la course du levier de frein et au moins une position de repos.

Dans une réalisation particulière, la barre 1 peut être stockée au repos en inversant les positions de ses parties extrêmes 2a, 2b.

Pour des raisons de facilité d'utilisation, la barre 1 est montée sur des flasques qui saillent vers le haut des montants et longerons du châssis de la remorque.

En variante, la barre (ou au moins une autre barre) peuvent être placées coulissantes et verrouillables en position, par rapport à des flasques solidaires des montants et longerons du châssis de la remorque, et saillant vers le bas.

La barre 1 peut, en variante, être une barre en U dont les deux branches saillent au delà du plan P de mouvement du levier de frein, de sorte que tant le serrage que le desserrage de ce levier est empêché.

Le dispositif antivol tel qu'il vient d'être décrit peut être combiné à des moyens de détection de vol électronique, connus en eux-mêmes.

Ainsi par exemple, un forçage du moyen de blocage 10 pourra entraîner le déclenchement d'une sirène générale ou de signaux lumineux sur le site dans lequel est placée la remorque.

Le cas échéant, la chaîne pourra être reliée à un mât d'amarrage présent sur le site.

Le système antivol selon l'invention est robuste, à double action, insensible aux intempéries, simple d'usage et peu onéreux. Il peut être adapté à toute remorque existante, que celui ci soit de type à rotule ou à anneau, cette modification pouvant être temporaire.

Ce système antivol est ainsi particulièrement adapté aux applications bâtiments et travaux publics, ainsi qu'à la location de remorques.

## Revendications

1. Dispositif antivol pour remorques, **caractérisé** en ce qu'il comporte un moyen de blocage de la course de desserrage du levier de frein (3) formant butée mécanique sur la course de celui ci.

2. Dispositif selon la revendication 1, **caractérisé** en ce que ce moyen de blocage comprend au moins une barre rigide (1) apte à être montée en coulissement sur le châssis de la remorque et à être maintenue dans au moins une position dans laquelle une première partie extrême (2a) de cette barre (1) saille au delà du plan moyen de manoeuvre du levier de frein (3).

3. Dispositif selon la revendication 2, **caractérisé** en ce que ladite première partie extrême (2a) de la barre rigide (1) est pourvue d'au moins une portion courbée placée sensiblement en regard du levier de frein (3) en position serrée.

4. Dispositif selon l'une quelconque des revendications 1 à 3, **caractérisé** en ce qu'il comprend un moyen de liaison (13) entre le moyen de blocage de la course de desserrage du levier de frein et un moyen d'obturation de l'organe d'attelage.

5. Dispositif selon la revendication 4, **caractérisé** en ce que le moyen d'obturation de l'organe d'attelage comprend au moins une plaque rigide (15) de diamètre supérieur à celui de l'anneau d'attelage (16).

6. Dispositif selon la revendication 5, **caractérisé** en ce que le moyen d'obturation comprend deux plaques rigides de diamètres supérieurs à celui de l'anneau d'attelage (16), ces deux plaques étant aptes à être placées au dessus et en dessous de l'ouverture de l'anneau, en position verrouillée entre elles.

7. Dispositif selon la revendication 4, **caractérisé** en ce que le moyen d'obturation est un manchon encapuchonnant la rotule d'attelage (18).

8. Dispositif selon la revendication 4, **caractérisé** en ce que le moyen d'obturation est un boîtier (17) comprenant une paroi de fond et une paroi latérale, ce boîtier étant pourvu d'une ouverture opposée au fond.

9. Dispositif selon l'une quelconque des revendications 4 à 8, **caractérisé** en ce que le moyen de liaison est une chaîne (13) ou tout autre moyen équivalent dont la longueur et la résistance mécanique sont telles que le dégagement du moyen d'obturation est impossible sans déblocage de la barre rigide (1).

10. Dispositif selon la revendication 9, **caractérisé** en ce qu'il comprend un moyen de verrouillage de la barre rigide (1) en au moins une position de blocage de la course du levier de frein (3), ce moyen de verrouillage étant placé entre deux flasques de guidage (7, 8) en coulissement de la barre rigide, ces deux flasques (7,8) étant solidaires du châssis de la remorque.

11. Dispositif selon la revendication 10, **caractérisé** en ce que les flasques (7,8) sont disposés en saillie vers le haut sur le châssis de la remorque.

12. Remorque comprenant au moins un dispositif tel que présenté dans l'une quelconque des revendications précédentes.

13. Remorque selon la revendication 12, **caractérisée** en ce qu'elle comprend un timon droit.

14. Remorque selon la revendication 12, **caractérisée** en ce qu'elle comprend un timon réglable.
